# EUROPÄISCHE PATENTANMELDUNG

(11) **EP 3 378 306 A1**
(43) Veröffentlichungstag der Anmeldung: **26.09.2018**
(21) Anmeldenummer: 17162863.9
(22) Anmeldetag: 24.03.2017
(51) Int. Cl.: A01M 7/00

(54) **DRIFT-KORREKTUR BEIM AUSBRINGEN VON PFLANZENSCHUTZMITTELN**

(71) Anmelder: Bayer Aktiengesellschaft, 51373 Leverkusen (DE)
(72) Erfinder: Die Erfindernennung liegt noch nicht vor
(74) Vertreter: BIP Patents

(57) **Zusammenfassung**

Die vorliegende Erfindung befasst sich mit dem autonomen Ausbringen von Pflanzenschutzmitteln mittels einer Drohne. Gegenstand der vorliegenden Erfindung sind ein Verfahren und ein unbemanntes Luftfahrzeug zum Ausbringen von Pflanzenschutzmittel unter Berücksichtigung von Drifterscheinungen. Gegenstand der vorliegenden Erfindung ist ferner ein Computerprogrammprodukt, das zur Steuerung des erfindungsgemäßen Verfahrens eingesetzt werden kann.

## Beschreibung

Die vorliegende Erfindung befasst sich mit dem autonomen Ausbringen von Pflanzenschutzmitteln mittels einer Drohne. Gegenstand der vorliegenden Erfindung sind ein Verfahren und ein unbemanntes Luftfahrzeug zum Ausbringen von Pflanzenschutzmittel unter Berücksichtigung von Drifterscheinungen. Gegenstand der vorliegenden Erfindung ist ferner ein Computerprogrammprodukt, das zur Steuerung des erfindungsgemäßen Verfahrens eingesetzt werden kann.

Automatisierung hat längst auch im Bereich der Landwirtschaft Einzug gehalten. Autonome Landmaschinen führen Feldarbeiten durch; autonome Luftfahrtzeuge (Drohnen) erkunden Feldeigenschaften und übernehmen die Applikation von Pflanzenschutzmitteln (siehe z.B. US2014303814A1, WO2015/161352A2).

Beim Einsatz von Drohnen zur Applikation eines Pflanzenschutzmittels besteht die Gefahr, dass das Pflanzenschutzmittel durch Wind ungleichmäßig verteilt wird. Eine ungleichmäßige Verteilung ist ungünstig, da zu wenig Pflanzenschutzmittel eine unzureichende Wirkung bedeuten könnte oder zur Bildung von Resistenzen gegen das eingesetzte Pflanzenschutzmittel führen kann. Eine übermäßige Ausbringung von Pflanzenschutzmittel könnte hingegen einen Schaden anrichten oder gegen gesetzliche oder behördliche Bestimmungen verstoßen. Es ist denkbar, dass es in einem Feld oder angrenzend an ein Feld geschützte Zonen gibt, die nicht mit Pflanzenschutzmittel in Berührung kommen dürfen. Durch Wind besteht die Gefahr, dass Pflanzenschutzmittel bei der Applikation mittels einer Drohne in solche Zonen gelangt.

Die Gegenstände der unabhängigen Ansprüche 1, 9 und 10 widmen sich diesen Problemen.

Ein erster Gegenstand der vorliegenden Erfindung ist somit ein Verfahren zur Ausbringung eines Pflanzenschutzmittels auf ein Feld mittels eines autonomen Luftfahrzeugs (Drohne), umfassend die Schritte
- Bereitstellen einer digitalen Applikationskarte für das Feld, in der für einzelne Teilflächen des Feldes die zu applizierenden Mengen des Pflanzenschutzmittels verzeichnet sind
- Überfliegen des Felds durch das autonome Luftfahrzeug entlang einer Route und Ausbringen des Pflanzenschutzmittels über mindestens eine Düse
- Ermitteln der räumlichen Verteilung des Pflanzenschutzmittels beim Ausbringen
- Anpassen der Parameter zum Ausbringen des Pflanzenschutzmittels an die ermittelte räumliche Verteilung, so dass ein Auftrag des Pflanzenschutzmittels auf den Teilflächen des Feldes der digitalen Applikationskarte entsprechend erfolgt.

Ein weiterer Gegenstand der vorliegenden Erfindung ist ein unbemanntes Luftfahrzeug zum Ausbringen eines Pflanzenschutzmittels auf ein Feld, auf dem Kulturpflanzen angebaut werden, umfassend
- einen Behälter für das Pflanzenschutzmittel
- mindestens eine Düse zur Abgabe des Pflanzenschutzmittels über dem Feld
- Fördermittel zur Förderung eines Pflanzenschutzmittels aus dem Behälter in Richtung der mindestens einen Düse
- eine Speichereinheit zum Speichern einer digitalen Applikationskarte, in der für einzelne Teilflächen des Feldes die zu applizierenden Mengen des Pflanzenschutzmittels verzeichnet sind
- eine Steuereinheit, die so konfiguriert ist, dass sie das Luftfahrzeug entlang einer Route über das Feld manövriert und dabei die Fördermittel dazu veranlasst, während des Flugs des unbemannten Luftfahrzeugs über das Feld Pflanzenschutzmittel über die mindestens eine Düse gemäß der digitalen Applikationskarte abzugeben; wobei die Steuereinheit Informationen zur räumlichen Verteilung des Pflanzenschutzmittels empfängt und Applikationsparameter anpasst, wenn die räumliche Verteilung dazu führt, dass die ausgebrachten Mengen von den Angaben der digitalen Applikationskarte abweichen.

Ein weiterer Gegenstand der vorliegenden Erfindung ist ein Computerprogrammprodukt umfassend einen Datenträger und Programmcode, der auf dem Datenträger gespeichert ist, und einen Computer oder eine Steuereinheit, in dessen/deren Arbeitsspeicher der Programmcode geladen ist, dazu veranlasst, die folgenden Schritte auszuführen:
- Einlesen einer digitalen Applikationskarte, in der für einzelne Teilflächen eines Feldes die zu applizierenden Mengen eines Pflanzenschutzmittels verzeichnet sind
- Steuerung einer Drohne zum Ausbringen des Pflanzenschutzmittels auf dem Feld gemäß der digitalen Applikationskarte
- Ermitteln von Abdrift während des Ausbringens des Pflanzenschutzmittels
- Anpassen der Applikationsparameter und/oder Flugparameter (Fluggeschwindigkeit und Flughöhe) und/oder Route derart, dass Abdrift reduziert oder minimiert wird.

Die Erfindung wird nachstehend näher erläutert, ohne zwischen den Erfindungsgegenständen (Verfahren, Drohne, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Drohne, Computerprogrammprodukt) sie erfolgen.

In einem ersten Schritt des erfindungsgemäßen Verfahrens wird eine digitale Applikationskarte für ein Feld, in dem Kulturpflanzen angebaut werden oder angebaut werden sollen, bereitgestellt.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden. In einem Feld kann eine einzelne Sorte einer Kulturpflanze angebaut werden; es können aber auch verschiedene Sorten einer Kulturpflanze und/oder verschiedene Kulturpflanzen angebaut werden. Es ist auch denkbar, dass ein Feld einen Bereich oder mehrere Bereiche umfasst, in dem/denen keine Kulturpflanzen angebaut sind und/oder angebaut werden sollen.

Unter dem Begriff "Kulturpflanze" wird eine Pflanze verstanden, die durch das Eingreifen der Menschen zielgerichtet als Nutz- oder Zierpflanze angebaut wird.

Eine digitale Applikationskarte ist eine digitale Repräsentation des Feldes oder eines Teils des Feldes. In der Applikationskarte ist angegeben, auf welchen Teilflächen des Feldes, welche Mengen eines oder mehrerer ausgewählter Pflanzenschutzmittel appliziert werden sollen, um beispielsweise die Ausbreitung von Schadorganismen zu verhindern und/oder Schadorganismen zu bekämpfen.

Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler).

Beispiele für Pflanzenschutzmittel sind Herbizide, Fungizide und Pestizide (z.B. Insektizide).

Ein Pflanzenschutzmittel enthält üblicherweise einen Wirkstoff oder mehrere Wirkstoffe. Als "Wirkstoffe" werden Substanzen bezeichnet, die in einem Organismus eine spezifische Wirkung haben und eine spezifische Reaktion hervorrufen. Üblicherweise enthält ein Pflanzenschutzmittel einen Trägerstoff zum Verdünnen des einen oder der mehreren Wirkstoffe. Daneben sind Additive wie Konservierungsmittel, Puffer, Farbstoffe und dergleichen denkbar. Ein Pflanzenschutzmittel kann fest, flüssig oder gasförmig vorliegen.

Wachstumsregler dienen zum Beispiel der Erhöhung der Standfestigkeit bei Getreide durch Verkürzung der Halmlänge (Halmverkürzer oder besser Internodienverkürzer), Verbesserung der Bewurzelung von Stecklingen, Verringerung der Pflanzenhöhe durch Stauchung im Gartenbau oder der Verhinderung der Keimung von Kartoffeln. Es sind üblicherweise Phytohormone oder deren synthetischen Analoge.

Unter einem "Schadorganismus" oder auch kurz "Schädling" wird ein Organismus verstanden, der beim Anbau von Kulturpflanzen in Erscheinung treten und die Kulturpflanze schädigen, die Ernte der Kulturpflanze negativ beeinflussen oder mit der Kulturpflanze um natürliche Ressourcen konkurrieren kann. Beispiele für derartige Schadorganismen sind Unkräuter, Ungräser, tierische Schädlinge wie beispielsweise Käfer, Raupen und Würmer, Pilze und Krankheitserreger (z.B. Bakterien und Viren). Auch wenn Viren aus biologischer Sicht nicht zu den Organismen zählen, sollen sie dennoch vorliegend unter den Begriff Schadorganismus fallen.

Unter dem Begriff "Unkraut" (Mehrzahl: Unkräuter) werden Pflanzen der spontanen Begleitvegetation in Kulturpflanzenbeständen, Grünland oder Gartenanlagen verstanden, die dort nicht gezielt angebaut werden und z.B. aus dem Samenpotential des Bodens oder über Zuflug zur Entwicklung kommen. Der Begriff ist nicht auf Kräuter im eigentlichen Sinne beschränkt, sondern umfasst auch Gräser, Farne, Moose oder holzige Pflanzen.

Im Bereich des Pflanzenschutzes wird häufig auch der Begriff "Ungras" (Mehrzahl: Ungräser) benutzt, um eine Abgrenzung zu den krautigen Pflanzen zu verdeutlichen. Im vorliegenden Text wird der Begriff Unkraut als Oberbegriff verwendet, der Ungras mit erfassen soll, es sei denn, es wird auf spezifische Unkräuter oder Ungräser Bezug genommen.

Ungräser und Unkräuter im Sinne der vorliegenden Erfindung sind demnach Pflanzen, die beim Anbau einer gewünschten Kulturpflanze als Begleitung auftreten. Da sie mit der Kulturpflanze um Ressourcen konkurrieren, sind sie unerwünscht und sollen daher bekämpft werden.

Prinzipiell ist es auch denkbar, die vorliegende Erfindung auch für die Ausbringung eines oder mehrerer Nährstoffe auf ein Feld zu verwenden.

Unter dem Begriff "Nährstoffe" werden diejenigen anorganischen und organischen Verbindungen verstanden, denen Pflanzen die Elemente entnehmen können, aus denen ihre Körper aufgebaut sind. Als Nährstoffe werden oft auch diese Elemente selbst bezeichnet. Je nach dem Standort der Pflanze werden die Nährstoffe aus der Luft, dem Wasser und dem Boden entnommen. Dabei handelt es sich meistens um einfache anorganische Verbindungen wie Wasser (H₂O) und Kohlendioxid (CO₂) sowie Ionen wie Nitrat (NO₃⁻), Phosphat (PO₄³⁻) und Kalium (K⁺). Die Verfügbarkeit der Nährstoffe ist unterschiedlich. Sie hängt vom chemischen Verhalten des Nährstoffs und von den Standortbedingungen ab. Da die Nährstoff-Elemente in einem bestimmten Mengenverhältnis benötigt werden, begrenzt meist die Verfügbarkeit eines Elementes das Wachstum der Pflanzen. Führt man dieses Element zu, steigert sich das Wachstum. Lebensnotwendig sind neben den Kernelementen der organischen Substanz (C, O, H, N und P) noch K, S, Ca, Mg, Mo, Cu, Zn, Fe, B, Mn, Cl bei höheren Pflanzen, Co, Ni. Stickstoff kann beispielsweise als Nitrat, Ammonium oder Aminosäure zugeführt werden. Teilweise ist Na⁺ als Funktionsersatz für K⁺ einsetzbar.

Methoden zur Erzeugung von digitalen Applikationskarten, sind beispielsweise in GB2447681A, US6199000, US 2009/0132132A1 und WO00/23937 beschrieben.

Üblicherweise wird zur Erzeugung einer digitalen Applikationskarte zunächst ein Bedarf an der Behandlung des Feldes oder Teilflächen des Feldes mit einem Pflanzenschutzmittel ermittelt.

Der Bedarf an einer Behandlung kann z.B. daher rühren, dass ein Schädlingsbefall aufgetreten ist oder aufzutreten droht. Es ist beispielsweise denkbar, dass vor dem Ausbringen der Saat einer Kulturpflanze die im Feld befindlichen Unkräuter entfernt werden müssen. Es ist auch denkbar, dass sich nach der Aussaat Unkräuter im Feld entwickelt haben, die entfernt werden müssen. Es ist auch denkbar, dass ein Teil der angebauten Kulturpflanzen oder alle Kulturpflanzen mit einem Krankheitserreger oder einem Pilz befallen ist/sind. Es ist auch denkbar, dass sich ein tierischer Schädling in dem Feld ausgebreitet hat. Denkbar ist auch, dass die Ausbreitung eines Schädlingsbefalls droht.

Die Ermittlung des Bedarfs erfolgt vorzugsweise durch Einsatz von Sensoren im und/oder über dem Feld. Als Sensoren kommen beispielsweise Fernerkundungssensoren in Frage. Durch Fernerkundungssensoren werden digitale Abbildungen von Bereichen der Erdoberfläche erzeugt, aus denen Informationen über die dort herrschende Vegetation und/oder die dort herrschenden Umweltbedingungen gewonnen werden können (siehe z.B. M. S. Moran et al.: Opportunities and Limitations for Image-Based Remote Sensing in Precision Crop Management, Remote Sensing of Environment (1997) 61: 319-346).

Die Daten dieser Sensoren (Fernerkundungsdaten) werden über die vom Anbieter zur Verfügung gestellten Schnittstellen bezogen und können elektromagnetische Datensätze verschiedener Verarbeitungsstufen umfassen.

Anstelle von oder in Ergänzung zu Fernerkundungsdaten können Informationen zur Bedarfsermittlung auch mittels Sensoren im Feld gewonnen werden. Als Beispiel seien LiDAR-Sensoren zur Ermittlung von Flugschädlingen oder Sensoren, die Auskunft über Unterschiede in den Wachstumsstadien/-bedingungen geben (z.B. N-Sensor der Firma Yara oder GreenSeeker der Firma Trimble), genannt.

Es ist auch denkbar, für die Ermittlung eines Bedarfs Prognosemodelle z.B. zur Vorhersage eines Schädlingsbefalls einzusetzen. Solche Prognosemodelle sind im Stand der Technik ausgiebig beschrieben und auch kommerziell verfügbar. Das Entscheidungsunterstützungssystem proPlant Expert verwendet zur Prognose Daten zur angebauten Kultur (Entwicklungsstadium, Wachstumsbedingungen, Pflanzenschutzmaßnahmen), zur Witterung (Temperatur, Sonnenscheindauer, Windgeschwindigkeit, Niederschlag) sowie zu den bekannten Schädlingen / Krankheiten (ökonomische Grenzwerte, Schädlings-/Krankheitsdruck) und berechnet auf Basis dieser Daten ein Befallsrisiko (Newe M., Meier H., Johnen A., Volk T.: proPlant expert.com - an online consultation system on crop protection in cereals, rape, potatoes and sugarbeet. EPPO Bulletin 2003, 33, 443-449; Johnen A., Williams I.H., Nilsson C., Klukowski Z., Luik A., Ulber B.: The proPlant Decision Support System: Phenological Models for the Major Pests of Oilseed Rape and Their Key Parasitoids in Europe, Biocontrol-Based Integrated Management of Oilseed Rape Pests (2010) Ed.: Ingrid H. Williams. Tartu 51014, Estonia. ISBN 978-90-481-3982-8. p. 381-403; www.proPlantexpert.com).

Die Bedarfsermittlung erfolgt vorzugsweise teilflächenspezifisch. Üblicherweise ist der Bedarf an der Behandlung mit einem Pflanzenschutzmittel über ein Feld nicht einheitlich sondern variiert. Ein Schädlingsbefall tritt üblicherweise zunächst an einer oder an mehreren Stellen auf und breitet sich von dort aus. Es ist also in der Regel so, dass einige Teilflächen innerhalb eines Feldes einen höheren Bedarf an einer Behandlung mit einem Pflanzenschutzmittel haben, während andere Bereiche vielleicht gar keinen Bedarf haben.

Nach der vorzugsweise teilflächenspezifischen Bedarfsermittlung erfolgt üblicherweise die Ermittlung der Bedarfsmenge an Pflanzenschutzmittel.

Die Bedarfsmenge kann sich beispielsweise nach der Schwere eines Befalls mit Schadorganismen richten. Es ist denkbar, dass eine Behandlung mit Pflanzenschutzmittel nur für Teilflächen geplant wird, bei denen eine Schadschwelle überschritten ist. Ferner ist denkbar, dass sich die Bedarfsmenge an dem Wachstumsstadium der zu behandelnden Pflanze orientiert.

Es ist aber auch denkbar, dass es in einem Feld oder angrenzend an ein Feld geschützte Zonen gibt, in denen eine Applikation eines Pflanzenschutzmittels unterbleiben sollte.

Bei der Bedarfsermittlung sind gesetzliche und/oder behördliche Grenzwerte zu berücksichtigen. Ferner kann es neben Maximalmengen, die ausgebracht werden dürfen, auch Minimalmengen geben, die ausgebracht werden sollten, um beispielsweise Resistenzen zu vermeiden.

Auch bereits in der Vergangenheit ausgebrachte Mengen an Pflanzenschutzmitteln sind bei der Bedarfsmengenermittlung zu berücksichtigen.

Es ist auch denkbar, vor Beginn der Applikation von Pflanzenschutzmittel Bedarfsmengen grob festzulegen und während des Überfliegens des Feldes mittels Sensor(en) an der Drohne die tatsächlichen teilflächenspezifischen Bedarfsmengen zu ermitteln (Verfeinerung).

Es ist ferner denkbar, die Bedarfsmengen mittels Sensor(en) an der Drohne erst während des Überfliegens des Feldes zu bestimmen.

Sind die Bedarfsmengen ermittelt, wird eine digitale Applikationskarte erstellt, in der entsprechend der ermittelten Bedarfsmengen die zu applizierenden Mengen des Pflanzenschutzmittels teilflächenspezifisch verzeichnet sind. Diese digitale Applikationskarte wird hier auch als "ursprüngliche Applikationskarte" bezeichnet. Es ist denkbar, die ursprüngliche Applikationskarte während des Ausbringens eines Pflanzenschutzmittels an lokale Gegebenheiten anzupassen.

Die digitale Applikationskarte kann in einen Speicher für digitale Daten eines unbemannten Luftfahrzeugs geladen werden. Ein unbemanntes Luftfahrzeug (englisch: *unmanned aerial vehicle,* UAV) ist ein Luftfahrzeug, das ohne eine an Bord befindliche Besatzung autark durch einen Computer oder vom Boden über eine Fernsteuerung betrieben und navigiert werden kann. In dieser Beschreibung werden synonym zum Begriff "unbemanntes Luftfahrzeug" auch die Begriffe "autonomes Luftfahrzeug" und "Drohne" verwendet. Vorzugsweise wird die erfindungsgemäße Drohne autark durch einen an Bord befindlichen Computer gesteuert und navigiert. Dazu weist die erfindungsgemäße Drohne ein Positionsbestimmungssystem, vorzugsweise ein satellitengestütztes Positionsbestimmungssystem auf. Das Global Positioning System (GPS; deutsch Globales Positionsbestimmungssystem), offiziell NAVSTAR GPS, ist ein globales Navigationssatellitensystem zur Positionsbestimmung.

Die erfindungsgemäße Drohne weist ferner einen Behälter für die Aufnahme eines Pflanzenschutzmittels, mindestens eine Düse sowie Mittel zur Förderung eines Pflanzenschutzmittels aus dem Behälter in Richtung der mindestens einen Düse auf. Über die mindestens eine Düse wird das Pflanzenschutzmittel appliziert, d.h. über dem Feld abgegeben.

Die erfindungsgemäße Drohne überfliegt das Feld. Ein Computer erfasst die jeweilige Position der Drohne. Ferner wird aus der digitalen Applikationskarte die zu der jeweiligen Position korrespondierende Menge an Pflanzenschutzmittel ermittelt. Über eine Steuereinheit wird die jeweilige Menge abgegeben.

Während des Überfliegens der Drohne über das Feld und der Abgabe von Pflanzenschutzmittel über die mindestens eine Düse kann es sein, dass das Pflanzenschutzmittel nicht dort landet, wo es laut der ursprünglichen digitalen Applikationskarte landen sollte. Es kann sein, dass Pflanzenschutzmittel durch Wind zumindest teilweise in andere Bereiche getragen wird.

Unter dem Begriff "Drift" werden alle Effekte verstanden, die dazu führen, dass Pflanzenschutzmittel, das über mindestens eine Düse abgegeben wird, nicht dort landet, wo es landen soll. In einer bevorzugten Ausführungsform ist Wind die Ursache für Drift.

Unter dem Begriff "Abdrift" wird der Anteil der ausgebrachten Pflanzenschutzmittelmenge verstanden, der während der Applikation nicht dort landet, wo er gemäß der ursprünglichen digitalen Applikationskarte landen sollte.

Erfindungsgemäß wird während des Überfliegens der Drohne über das Feld und während des Ausbringens des Pflanzenschutzmittels ermittelt, wie sich das Pflanzenschutzmittel räumlich verteilt.

Es ist zum Beispiel denkbar, dass ein oder mehrere Windsensoren an der Drohne und/oder im Feld die Windrichtung und die Windgeschwindigkeit messen. Anhand eines Modells wird berechnet, wie sich das über die mindestens eine Düse abgegebene Pflanzenschutzmittel durch den Wind und die Schwerkraft beim Absinken räumlich verteilt und welche Mengen teilflächenspezifisch auf das Feld aufgebracht werden (Menge pro Flächeneinheit).

Es ist denkbar, dass (statt oder in Ergänzung zu einem oder mehreren Windsensoren) in dem Feld Mengen-Sensoren vorhanden sind, die einen Teil des von der Drohne abgegebenen Pflanzenschutzmittels auffangen und die teilflächenspezifische Menge ermittelt. Vorzugsweise stehen diese Mengen-Sensoren in einer kommunikativen Verbindung mit der Drohne, so dass sie z.B. die Position der Drohne feststellen können. Aus der flächenspezifischen Menge im Feld lässt sich bei Kenntnis der Position der Drohne während der Applikation die räumliche Verteilung des Pflanzenschutzmittels während des Ausbringens berechnen.

Vorzugsweise wird während des Flugs der Drohne über das Feld und während des Ausbringens von Pflanzenschutzmittel eine digitale Verteilungskarte erstellt, in die die jeweiligen Mengen an Pflanzenschutzmittel, die auf den einzelnen Flächen gelandet sind, festgehalten werden. Während die ursprüngliche Applikationskarte den Soll-Zustand darstellt, repräsentiert die digitale Verteilungskarte sozusagen den Ist-Zustand. Die Abweichung zwischen Soll-Zustand (ursprüngliche digitale Applikationskarte) und Ist-Zustand (digitale Verteilungskarte) wird durch Drift verursacht.

Um nun dem Soll-Zustand nahe zu kommen, werden Applikationsparameter an die herrschende Drift angepasst.

In einer bevorzugten Ausführungsform wird die Abdrift erfasst, und die ursprüngliche Applikationskarte entsprechend der Abdrift aktualisiert. Infolge der Drift sind Mengen des Pflanzenschutzmittels auf Teilflächen gelandet, die gemäß der aktuellen Route der Drohne (noch) nicht mit Pflanzenschutzmittel besprüht werden sollten. Es ist aber denkbar, dass sie gemäß der aktuellen Route zu einem späteren Zeitpunkt besprüht werden sollen. Da aber bereits eine gewisse Menge an Pflanzenschutzmittel auf diesen Teilflächen gelandet ist (die Abdriftmenge) verringert sich die noch zu applizierende Menge entsprechend. Das bedeutet, dass in der (ursprünglichen) Applikationskarte bei den betroffenen Teilflächen die jeweilige Abdriftmenge von der zu applizierenden Menge abgezogen wird. Bei dem späteren Überflug der Drohne über die betroffene Teilfläche wird dann entsprechend weniger Pflanzenschutzmittel appliziert.

Vorzugsweise wird die digitale Applikationskarte während des Applikationsvorgangs fortwährend aktualisiert.

Ferner können weitere Applikationsparameter an die herrschende Drift angepasst werden. Es ist zum Beispiel denkbar, dass die Route der Drohne angepasst wird. Führt die ursprüngliche Route dicht an einer geschützten Zone, in der keine Applikation erfolgen sollte, vorbei, und wird während des Applizierens ein starker Wind registriert, infolge dessen die Gefahr besteht, dass Pflanzenschutzmittel aufgrund der Drift in die geschützte Zone gelangt, kann die Route so angepasst werden, dass kein Pflanzenschutzmittel mehr in die geschützte Zone gelangen kann. Der Abstand der Route von der geschützten Zone kann vergrößert werden. Ferner kann die Höhe der Drohne reduziert werden.

Weitere Applikationsparameter, die an die herrschende Drift angepasst werden können, sind beispielsweise die Anzahl der Düsen, über die Pflanzenschutzmittel abgegeben wird, die Düsenstellung, der Druck vor der mindestens einen Düse, die Fluggeschwindigkeit der Drohne, die Flughöhe und andere.

Die erfindungsgemäße Drohne verfügt über eine Steuereinheit, die verschiedene Aufgaben erfüllt. Es ist denkbar, dass anstelle einer einzigen Steuereinheit, mehrere Steuereinheiten vorhanden sind, auf die die verschiedenen Aufgaben verteilt sind. Vereinfachend ist hier nur von einer Steuereinheit die Rede.

Eine Aufgabe der Steuereinheit besteht in dem Manövrieren der Drohne entlang der vorgegebenen Route. Die Route kann in der digitalen Applikationskarte verzeichnet sein; es ist aber auch denkbar, dass die Route unabhängig von der digitalen Applikationskarte erstellt und separat in einen Speicher der Drohne geladen wird. Denkbar ist auch, dass die Drohne ferngesteuert ist, d.h., dass sie in Verbindung mit einer stationären Steuereinheit steht, die die jeweilige Position der Drohne überwacht und der Drohne Anweisungen übermittelt, in welche Richtung sich die Drohne bewegen soll.

Eine weitere Aufgabe der Steuereinheit besteht in der Abgabe von Pflanzenschutzmittel gemäß der digitalen Applikationskarte. Dazu wird die digitale Applikationskarte in einen Arbeitsspeicher der Steuereinheit geladen. Die Steuereinheit erfasst die Position der Drohne über dem Feld und ermittelt die gemäß digitaler Applikationskarte an der entsprechenden Position abzugebende Menge des Pflanzenschutzmittels. Die Steuereinheit veranlasst die Fördermittel, die entsprechende Menge an Pflanzenschutzmittel in Richtung Düse zu fördern. Über die Düse verlässt das Pflanzenschutzmittel die Drohne und gelangt auf das Feld.

Die Steuereinheit kann auch zur Ermittlung der Drift genutzt werden. Es ist zum Beispiel denkbar, dass die Drohne einen oder mehrere Windsensoren umfasst, die die Geschwindigkeit und die Richtung des herrschenden Winds messen und an die Steuereinheit übermitteln. Denkbar ist auch, dass die Steuereinheit die Informationen über den herrschenden Wind von externen stationären Windsensoren übermittelt bekommt. Die Steuereinheit kann über ein Modell verfügen, das die räumliche Verteilung des über die mindestens eine Düse abgegebenen Pflanzenschutzmittels unter variierenden Applikations- und Driftparametern berechnen kann. Denkbar ist aber auch, dass ein solches Modell auf einem externen stationären Computer implementiert ist, der in einer kommunikativen Verbindung zu der Steuereinheit der Drohne steht.

Anhand der aktuellen Applikations- und Driftparameter ermittelt das Modell die räumliche Verteilung des über die mindestens eine Düse abgegebenen Pflanzenschutzmittels. Ferner wird berechnet, wie sich das Pflanzenschutzmittel auf dem Feld verteilt. Diese Informationen können dann in eine digitale Verteilungskarte einfließen.

Mit dem Modell kann vorzugsweise auch berechnet werden, wie die Applikationsparameter angepasst werden müssen, um die durch die Drift verursachten Wirkungen zu kompensieren.

Die geänderten Applikationsparameter werden dann von der Steuereinheit z.B. zur Steuerung der Drohne, der Fördermittel und/oder der Düse entsprechend angewendet, um den in der ursprünglichen digitalen Applikationskarte vorgesehenen Zustand (Soll-Zustand) zu erreichen.

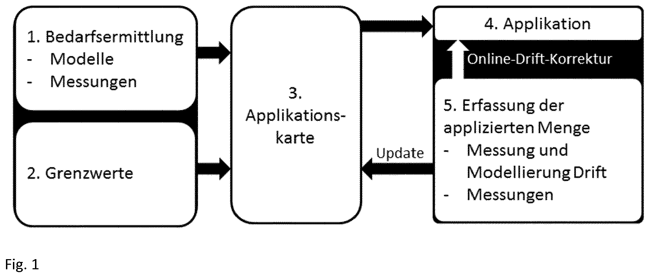

Figur 1 zeigt schematisch einen bevorzugten Ablauf zum Ausbringen von Pflanzenschutzmittel auf einem Feld mittels einer Drohne. Einzelne, in der Figur genannte oder in Bezug auf die Figur beschriebene Merkmale sind nicht auf die gezeigte Figur beschränkt sondern können in anderen Merkmalen der vorliegenden Beschreibung beliebig kombiniert werden.
1. Es wird der vorzugsweise teilflächenspezifische Bedarf eines Feldes an der Behandlung mit Pflanzenschutzmittel ermittelt. Dazu können Modelle wie beispielsweise Pflanzenwachstumsmodelle und/oder Prognosemodelle für den Befall mit einem Schadorganismus eingesetzt werden. Alternativ oder in Ergänzung dazu können Messungen durchgeführt werden, wie beispielsweise Messungen mit Sensoren, die zum Beispiel einen Befall mit einem Schadorganismus anzeigen, Messungen, die Informationen über das vorliegende Wachstumsstadium der im Feld herrschenden Vegetation geben und/oder Messungen von Umweltbedingungen (Bodenfeuchte, Wetter, u.a.), die Hinweise auf einen drohenden Befall mit einem Schadorganismus geben.
2. In die Ermittlung der Bedarfsmenge fließen Grenzwerte ein. Es kann obere Grenzwerte geben, z.B. weil es eine Maximalmenge an Pflanzenschutzmittel gibt, die ausgebracht werden darf. Es kann untere Grenzwerte geben, z.B. eine Mindestmenge an Pflanzenschutzmittel, die ausgebracht werden sollte, um Resistenzen zu verhindern.
3. Die ermittelten Bedarfsmengen fließen in die Erzeugung einer (ursprünglichen) digitalen Applikationskarte ein. In der Applikationskarte ist angegeben, welche Mengen an Pflanzenschutzmittel auf einzelnen Teilflächen des Feldes ausgebracht werden sollen.
4. Es erfolgt eine Ausbringen von Pflanzenschutzmittel gemäß der Applikationskarte, d.h. eine Drohne überfliegt das Feld und bringt an den Positionen, an denen sie sich jeweils befindet, diejenige Menge an Pflanzenschutzmittel aus, die in der digitalen Applikationskarte für die jeweilige Position verzeichnet ist.
5. Während des Ausbringens des Pflanzenschutzmittels wird die jeweils applizierte Menge erfasst. Zudem wird ermittelt, wie sich die applizierte Menge beim Ausbringen räumlich verteilt. Aus der räumlichen Verteilung wird ermittelt, welche Mengen des Pflanzenschutzmittels auf welchen Positionen des Feldes landen. Die Ermittlungen basieren zum einen auf Messungen insbesondere von Windgeschwindigkeit und Windrichtung, die für Drifterscheinungen verantwortlich sind, zum anderen auf der Modellierung der räumlichen Verteilung des durch mindestens eine Düse der Drohne abgegebenen Pflanzenschutzmittels. In die Modellierung können neben der Windgeschwindigkeit und Windrichtung die Applikationsparameter (wie z.B. abgegebene Menge pro Zeiteinheit, Düsenstellung, Anzahl der Düsen, Druck vor der Düse) sowie Flughöhe und Fluggeschwindigkeit der Drohne einfließen. Es ist aber auch denkbar, dass Sensoren in dem Feld eingesetzt werden, die einen Teil der auf dem Feld landenden Mengen an appliziertem Pflanzenschutzmittel auffangen.

Die gemäß Modellierung und/oder Messungen mittels Sensoren ermittelten Mengen an Pflanzenschutzmittel, die auf dem Feld landen, werden mit den in der digitalen Applikationskarte verzeichneten Mengen verglichen. Bei einer durch Drift verursachten Abweichung kann die digitale Applikationskarte angepasst werden, indem beispielsweise die Mengen, die infolge der Drift bereits auf Teilflächen gelandet sind, obwohl sie gemäß der aktuellen Route noch nicht auf den Teilflächen landen sollten, in der Applikationskarte erfassten werden (Update). Ferner ist es denkbar, die Applikationsparameter so anzupassen, dass die weitere Ausbringung von Pflanzenschutzmittel der Applikationskarte entsprechend erfolgt (Online-Drift-Korrektur).

## Patentansprüche

1. Verfahren zur Ausbringung eines Pflanzenschutzmittels auf ein Feld mittels eines autonomen Luftfahrzeugs (Drohne), umfassend die Schritte
• Bereitstellen einer digitalen Applikationskarte für das Feld, in der für einzelne Teilflächen des Feldes die zu applizierenden Mengen des Pflanzenschutzmittels verzeichnet sind
• Überfliegen des Felds durch das autonome Luftfahrzeug entlang einer Route und Ausbringen des Pflanzenschutzmittels über mindestens eine Düse
• Ermitteln der räumlichen Verteilung des Pflanzenschutzmittels beim Ausbringen
• Anpassen der Parameter zum Ausbringen des Pflanzenschutzmittels an die ermittelte räumliche Verteilung, so dass ein Auftrag des Pflanzenschutzmittels auf den Teilflächen des Feldes der digitalen Applikationskarte entsprechend erfolgt.

2. Verfahren gemäß Anspruch 1, **dadurch gekennzeichnet,**
**dass** die beim Ausbringen herrschende Windgeschwindigkeit und die Windrichtung mittels eines oder mehrerer Windsensoren erfasst wird, und
**dass** ermittelt wird, welche Mengen an Pflanzenschutzmittel infolge des Windes auf solchen Teilflächen des Feldes landen, die gemäß der Route und/oder der Applikationskarte nicht oder noch nicht mit Pflanzenschutzmittel behandelt werden sollen.

3. Verfahren gemäß einem der Ansprüche 1 oder 2, **dadurch gekennzeichnet, dass** mittels eines oder mehrerer Sensoren im Feld ein Teil der applizierten Mengen an Pflanzenschutzmittel aufgefangen und anhand der aufgefangenen Mittel die Mengen identifiziert werden, die auf solchen Teilflächen des Feldes landen, die gemäß der Route und/oder der Applikationskarte nicht oder noch nicht mit Pflanzenschutzmittel behandelt werden sollen.

4. Verfahren gemäß einem der Ansprüche 1 bis 3, **dadurch gekennzeichnet, dass** die digitale Applikationskarte während des Ausbringens aktualisiert wird, indem diejenigen Mengen, die auf solchen Teilflächen des Feldes landen, die gemäß der Route und der Applikationskarte noch nicht mit Pflanzenschutzmittel behandelt werden sollen, in der Applikationskarte verzeichnet werden.

5. Verfahren gemäß einem der Ansprüche 1 bis 4, **dadurch gekennzeichnet, dass** die Applikationsparameter zur Kompensation von Drifterscheinungen so geändert werden, dass beim weiteren Ausbringen keine Mengen an Pflanzenschutzmittel auf solchen Teilflächen landen, die gemäß der Route und der Applikationskarte noch nicht mit Pflanzenschutzmittel behandelt werden sollen.

6. Verfahren gemäß einem der Ansprüche 1 bis 5, **dadurch gekennzeichnet, dass** pro Zeiteinheit applizierte Mengen an Pflanzenschutzmittel, Anzahl der verwendeten Düsen, Düsenstellungen, Druck vor den Düsen, Flughöhe der Drohne, Fluggeschwindigkeit der Drohne, Windgeschwindigkeit und Windrichtung in ein Modell einfließen, mit dem die räumliche Verteilung des ausgebrachten Pflanzenschutzmittels bestimmt wird.

7. Verfahren gemäß einem der Ansprüche 1 bis 6, **dadurch gekennzeichnet, dass** eine digitale Verteilungskarte erstellt wird, wobei in der digitalen Verteilungskarte diejenigen Mengen an Pflanzenschutzmittel verzeichnet sind, die infolge des Ausbringens des Pflanzenschutzmittels auf den Teilflächen des Feldes gelandet sind.

8. Verfahren gemäß einem der Ansprüche 1 bis 7, **dadurch gekennzeichnet, dass** während des Ausbringens die digitale Applikationskarte mit der digitalen Verteilungskarte verglichen wird und die Applikationsparameter und/oder die Route und/oder Flughöhe und Fluggeschwindigkeit der Drohe so angepasst werden, dass die digitale Verteilungskarte der digitalen Applikationskarte entspricht.

9. Unbemanntes Luftfahrzeug (Drohne) zum Ausbringen eines Pflanzenschutzmittels auf ein Feld, auf dem Kulturpflanzen angebaut werden, umfassend
- einen Behälter für das Pflanzenschutzmittel
- mindestens eine Düse zur Abgabe des Pflanzenschutzmittels über dem Feld
- Fördermittel zur Förderung eines Pflanzenschutzmittels aus dem Behälter in Richtung der mindestens einen Düse
- eine Speichereinheit zum Speichern einer digitalen Applikationskarte, in der für einzelne Teilflächen des Feldes die zu applizierenden Mengen des Pflanzenschutzmittels verzeichnet sind
- eine Steuereinheit, die so konfiguriert ist, dass sie das Luftfahrzeug entlang einer Route über das Feld manövriert und dabei die Fördermittel dazu veranlasst, während des Flugs des unbemannten Luftfahrzeugs über das Feld Pflanzenschutzmittel über die mindestens eine Düse gemäß der digitalen Applikationskarte abzugeben; wobei die Steuereinheit Informationen zur räumlichen Verteilung des Pflanzenschutzmittels empfängt und Applikationsparameter anpasst, wenn die räumliche Verteilung dazu führt, dass die ausgebrachten Mengen von den Angaben der digitalen Applikationskarte abweichen.

10. Computerprogrammprodukt umfassend einen Datenträger und Programmcode, der auf dem Datenträger gespeichert ist, und einen Computer oder eine Steuereinheit, in dessen/deren Arbeitsspeicher der Programmcode geladen ist, dazu veranlasst, die folgenden Schritte auszuführen:
- Einlesen einer digitalen Applikationskarte, in der für einzelne Teilflächen eines Feldes die zu applizierenden Mengen eines Pflanzenschutzmittels verzeichnet sind
- Steuerung einer Drohne zum Ausbringen des Pflanzenschutzmittels auf dem Feld gemäß der digitalen Applikationskarte
- Ermitteln von Abdrift während des Ausbringens des Pflanzenschutzmittels
- Anpassen der Applikationsparameter und/oder Flugparameter und/oder Route derart, dass Abdrift reduziert oder minimiert wird.
